# EUROPEAN PATENT APPLICATION

(11) **EP 2 453 553 A1**
(43) Date of publication of application: **16.05.2012**
(21) Application number: 10844953.9
(22) Date of filing: 11.06.2010
(51) Int. Cl.: H02K 3/28, H02K 3/44, H02K 3/52, H02K 15/04, H02K 15/12

(54) **STATOR AND METHOD FOR MANUFACTURING STATOR**

(71) Applicant: Toyota Jidosha Kabushiki Kaisha, Toyota-shi, Aichi 471-8571 (JP)
(72) Inventor: NAKANISHI Koji, Toyota-shi Aichi 471-8571 (JP); YOSHIMURA Joji, Toyota-shi Aichi 471-8571 (JP); UENO Yasuhiro, Toyota-shi Aichi 471-8571 (JP); CHIBA Hisayoshi, Toyota-shi Aichi 471-8571 (JP); YOSHIDA Naoki, Toyota-shi Aichi 470-0342 (JP)
(74) Representative: Albutt, Anthony John
(86) International application number: PCT/JP2010/059932
(87) International publication number: WO 2011/155059

(57) **Abstract**

The invention has a purpose to provide a stator enabling size reduction and a method of manufacturing the stator. One aspect of the invention provides a stator a stator comprising a cylindrical core, a cylindrical outer ring provided on an outer periphery of the core, a coil mounted on a teeth part of the core, and a bus bar joined with a terminal of the coil, an end of the outer ring in an axial direction thereof protruding from an end face of the core in the axial direction, wherein a joint joining a terminal of the bus bar and the terminal of the coil is placed in a region defined between the coil and the outer ring in a radial direction of the core and between the end face of the core and the end of the outer ring in the axial direction of the core.

## Description

### TECHNICAL FIELD

The present invention relates to a stator to be used in an electric machine and a method of manufacturing the stator.

### BACKGROUND ART

In a stator used in an electric machine, a conductor wire forming a coil is coated with an insulating coating to provide insulation between adjacent parts of the conductor wire and insulation with a stator core. The insulating coating may include an enamel coating and a coating made of an insulating resin material such as polyurethane and polyimide amide. However, when a terminal of a bus bar and a terminal of a coil are to be joined by welding during manufacturing of the above stator, heat generated by welding transfers to the conductor wire. This causes a problem that the portions coated with the insulating coating are damaged. It is known that a coil is covered with molding resin. In the case where a coil terminal is welded, heat generated by welding similarly transfers to the conductor wire, which may deteriorate the molding resin that covers the coil. Further, spatters are dispersed during welding, which also may deteriorate the molding resin that covers the coil.

To avoid such disadvantages, in the present circumstances, a conductor wire is exposed by a constant length in a coil end in advance , thereby allowing the heat generated by welding to dissipate from the conductor wire. However, this configuration leads to an increase in size of the coil end and hence an increase in size of the stator.

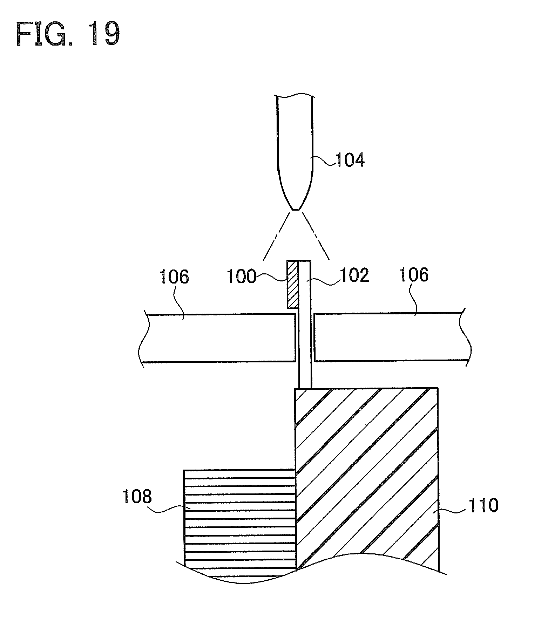

As shown in FIG. 19, when a bus bar terminal 100 and a coil terminal 102 are to be joined by welding by use of a welding machine 104, it is conceivable that jigs 106 are placed on both sides of and in contact with the coil terminal 102. Thus, the heat generated by welding is dissipated to the jigs 106, thereby cooling the coil terminal 102 to prevent the heat from concentrating in a base end of the coil terminal 102. This makes it possible to avoid damages in the insulating coating portion of the conductor wire constituting the coil in a core 108. Specifically, the jigs 106 serve as a cooling jig for the coil terminal 102. Further, spatters apt to be dispersed during welding are blocked by the jigs 106 from sticking to the molding resin 110 covering the coil. This can avoid deterioration of the resin 110. Thus, the jigs 106 act as a protecting jig for the resin 110. However, a joint between the bus bar terminal 100 and the coil terminal 102 is often located in a high position, resulting in an increase in size of the stator.

Herein, Patent Document 1 discloses a technique of joining a terminal of a bus bar with a terminal of a coil by welding in the vicinity of a coil end in an electric machine.

### RELATED ART DOCUMENTS

### PATENT DOCUMENTS

Patent Document 1: JP 2008-312290A

### DISCLOSURE OF THE INVENTION

### PROBLEMS TO BE SOLVED BY THE INVENTION

However, in the technique of Patent Document 1, the terminal of the bus bar with the terminal of the coil in the vicinity of the coil end. Such stator is large in size. Further, the joint between the terminal of the bus bar and the terminal of the coil is exposed to the outside. Thus, the joint is not sufficiently protected.

The present invention has been made to solve the above problems and has a purpose to provide a stator enabling reduction in size and a method of manufacturing the stator.

### MEANS OF SOLVING THE PROBLEMS

To achieve the above purpose, one aspect of the invention provides a stator comprising a cylindrical core, a cylindrical outer ring provided on an outer periphery of the core, a coil mounted on a teeth part of the core, and a bus bar joined with a terminal of the coil, an end of the outer ring in an axial direction thereof protruding from an end face of the core in the axial direction, wherein a joint joining a terminal of the bus bar and the terminal of the coil is placed in a region defined between the coil and the outer ring in a radial direction of the core and between the end face of the core and the end of the outer ring in the axial direction of the core.

According to the above configuration, a distance from the end face of the core in the axial direction to the joint joining the terminal of the bus bar and the terminal of the coil is short. This can achieve a reduction in size of the stator. Further, since a conductor wire is extended by a constant length in a coil end of the coil, the heat is not transferred to an insulating coating portion of the conductor wire. No damage will be caused on the insulating coating portion.

In the above aspect, preferably, a protecting material is filled in the region to protect the joint.

According to the above configuration, the joint between the terminal of the bus bar and the terminal of the coil can be protected by the protecting material.

In the above aspect, preferably, the protecting material is foaming resin.

The above configuration can achieve weight reduction of the stator and provide improved insulation property in the joint between the terminal of the bus bar and the terminal of the coil.

In the above aspect, preferably, the protecting material is resin containing a heat transfer material.

The above configuration can achieve enhanced heat dissipation characteristics of the stator and provide improved insulation property of the joint between the terminal of the bus bar and the terminal of the coil.

In the above aspect, preferably, the outer ring includes a flange formed to extend radially inwardly from the end.

According to the above configuration, the flange of the outer ring can protect the joint between the terminal of the bus bar and the terminal of the coil.

To achieve the above purpose, another aspect of the invention provides a method of manufacturing a stator comprising a cylindrical core, a cylindrical outer ring provided on an outer periphery of the core, a coil mounted on a teeth part of the core, and a bus bar joined with a terminal of the coil, an end of the outer ring in an axial direction thereof protruding from an end face of the core in the axial direction, the method comprising the steps of: bending the terminal of the coil from a state extending in the axial direction of the core toward the outer periphery of the core; and joining a terminal of the bus bar and the terminal of the coil; the terminal of the bus bar and the terminal of the coil being joined in a region defined between the coil and the outer ring in a radial direction of the core and between the end face of the core and the end of the outer ring in the axial direction of the core.

According to the above configuration, a distance from the end face of the core in the axial direction to the joint joining the terminal of the bus bar and the terminal of the coil is short. This can achieve a reduction in size of the stator. Further, since a conductor wire is extended by a constant length in a coil end of the coil, the heat is not transferred to an insulating coating portion of the conductor wire. No damage will be caused on the insulating coating portion.

In the above aspect, preferably, the method further comprises the step of filling a protecting material for protecting the joint in the region after the terminal of the bus bar and the terminal of the coil are joined.

According to the above configuration, the protecting material can protect the joint between the terminal of the bus bar and the terminal of the coil.
Further, the protecting material has only to be filled in the region defined by the outer ring, the end face of the core, and the coil. Accordingly, any mold or die for filling the protecting material is not necessary. This can simplify a manufacturing process of the stator.
Since the bus bar is entirely covered with the protecting material, the bus bar does not need to be coated with the insulating coating. This can also simplify the manufacturing process of the stator.

In the above aspect, preferably, the protecting material in a molten state is poured into the region.

According to the above configuration, the protecting material can be reliably filled in the region defined by the outer ring, the end face of the core, and the coil. Therefore, the joint between the terminal of the bus bar and the terminal of the coil can be protected by the protecting material more reliably.

In the above aspect, preferably, while the outer ring is fixed by shrink fitting to the outer periphery of the core, the protecting material in a solid state is poured into the region.

According to the above configuration, solid resin is melted by afterheat or residual heat of shrink fitting. This can simplify a manufacturing process of the stator and reduce a manufacturing cost.

In the above aspect, preferably, the protecting material is foaming resin.

The above configuration can achieve weight reduction of the stator. Since the foaming resin is melted while forming, the protecting material can easily spread, thereby enhancing the insulation property of the stator.

In the above aspect, preferably, the protecting material is resin containing a heat transfer material.

The above configuration can enhance the heat dissipation characteristics of the stator.

In the above aspect, preferably, the outer ring includes a flange formed to extend radially inwardly from an end of the outer ring in an axial direction thereof, and after joining the terminal of the bus bar and the terminal of the coil, the method further comprises fixing the outer ring by shrink fitting to the outer periphery of the core so that the flange covers the joint.

According to the above configuration, the outer ring including the flange is fixed to the outer periphery of the core by shrink fitting, thereby protecting the joint between the terminal of the bus bar and the terminal of the coil. This can simplify a manufacturing process of the stator.

### EFFECTS OF THE INVENTION

According to the stator and the method of manufacturing the stator, the stator can be reduced in size.

### BRIEF DESCRIPTION OF THE DRAWINGS

FIG. 1 is a view showing a stator according to the invention;
FIG. 2 is a view showing a split-type stator unit constituting a stator according to the invention;
FIG. 3 is a cross-sectional view of a stator in first to fourth embodiments;
FIG. 4 is an explanatory view for a stator manufacturing method in the first embodiment;
FIG. 5 is another explanatory view of the stator manufacturing method in the first embodiment;
FIG. 6 is another explanatory view of the stator manufacturing method in the first embodiment;
FIG. 7 is an explanatory view of a stator manufacturing method in a second embodiment;
FIG. 8 is another explanatory view of the stator manufacturing method in the second embodiment;
FIG. 9 is another explanatory view of the stator manufacturing method in the second embodiment;
FIG. 10 is another explanatory view of the stator manufacturing method in the second embodiment;
FIG. 11 is a cross-sectional view of a stator in a fifth embodiment;
FIG. 12 is an explanatory view of a stator manufacturing method in the fifth embodiment;
FIG. 13 is another explanatory view of the stator manufacturing method in the fifth embodiment;
FIG. 14 is an external perspective view of a outer ring in the fifth embodiment;
FIG. 15 is a cross-sectional view of a stator in a sixth embodiment;
FIG. 16 is an explanatory view of a stator manufacturing method in the sixth embodiment;
FIG. 17 is another explanatory view of the stator manufacturing method in the sixth embodiment;
FIG. 18 is a view showing one example of a molding device; and
FIG. 19 is a view showing a conventional art.

### MODE FOR CARRYING OUT THE INVENTION

A detailed description of preferred embodiments of the present invention will now be given referring to the accompanying drawings.

### (First Embodiment)

### <Explanation of the structure of a stator>

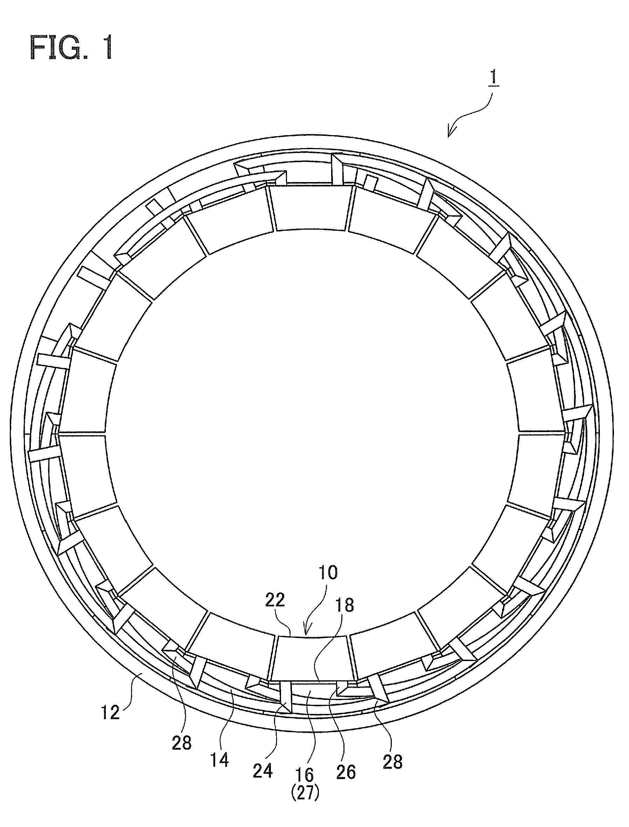

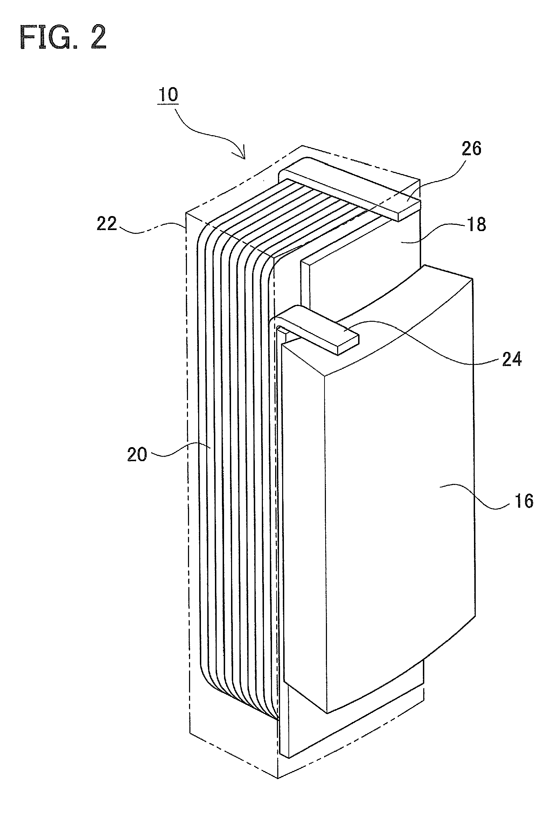

FIG. 1 is a view showing a stator 1 in the first embodiment. FIG. 2 is a view showing a split-type stator unit 10 constituting the stator 1 in the present embodiment.

The stator 1 in this embodiment is a split-type stator and includes the split-type stator units ("stator units") 10, an outer ring 12, bus bars 14, a protecting material 34, and others. In FIG. 1, the protecting material 34 is not illustrated. This protecting material 34 will be mentioned later.

As shown in FIG. 2, each stator unit 10 includes a split core member ("core member") 16, an insulator 18, a coil 20, and a resin molded portion 22. In FIG. 2, the stator unit 10 is illustrated in a perspective view showing the coil 20 present inside the resin molded portion 22. The core member 16 is made of laminated electromagnetic steel plates each of which is made by a press work. The core member 16 is formed with a teeth part not shown on an inner periphery side. The insulator 18 is inserted on this teeth part. Further, the coil 20 is mounted on the insulator 18.

The coil 20 is formed of a flat conductor having a rectangular cross section and wound by edgewise bending. This coil 20 includes a first coil terminal 24 and a second coil terminal 26 both being to be connected to the bus bars 14 mentioned later. The coil 20 is mounted on the teeth part not shown provided on the inner periphery side of a cylindrical core 27 mentioned later.

After the insulator 18 and the coil 20 are mounted on the core member 16, the outer periphery of the coil 20 is resin molded, or covered with molding resin, forming the resin molded portion 22 on the outer periphery of the coil 20. Further, the first coil terminal 24 and the second coil terminal 26 are placed to protrude from the resin molded portion 22. These terminals 24 and 26 are not covered with molding resin.

In the stator 1 in this embodiment, a plurality of the stator units 10 are arranged in a cylindrical shape as shown in FIG. 1, constituting the cylindrical core 27 consisting of the core members 16. The number of the stator units 10 is not particularly limited. FIG. 1 shows an example where eighteen stator units 10 in total are arranged.

The outer ring 12 is formed in a cylindrical shape and disposed on the outer periphery of the cylindrical core 27 consisting of the core members 16. In this way, the stator units 10 are retained in a circular arrangement by the outer ring 12.

The bus bars 14 are wires for electrically connecting the first coil terminals 24 and the second coil terminals 26 each protruding from the resin molded portions 22 of the stator units 10. Each bus bar 14 is made of a metal wire such as copper having good conductivity, the wire being coated with insulating coating. However, bus bar terminals 28 formed on both ends of each bus bar 14 are not coated with the insulating coating.

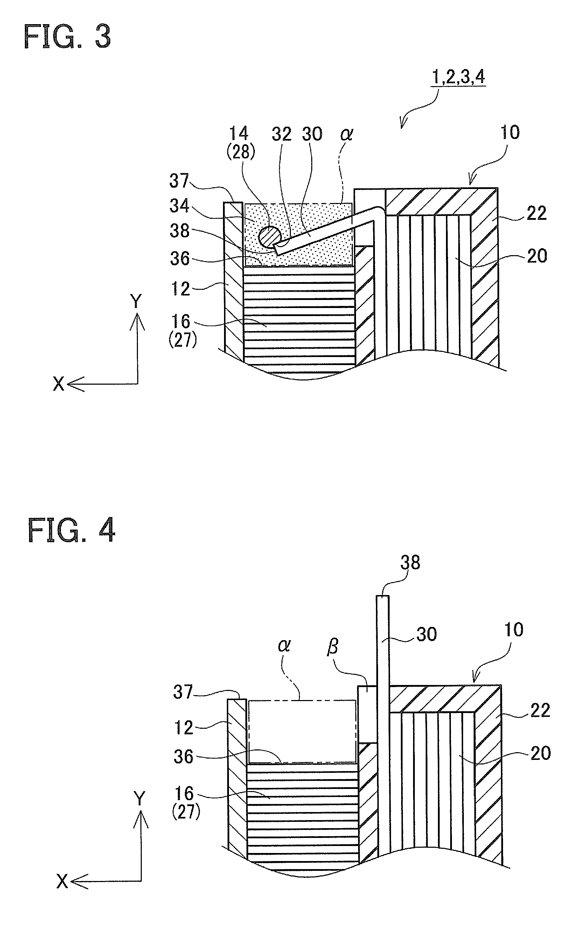

FIG. 3 is a side view showing the stator unit 10 in a simplified diagram. In the drawings related to the following explanations, the first coil terminal 24 and the second coil terminal 26 are collectively, instead of separately, referred to as a coil terminal 30 for convenience of explanation. As shown in FIG. 3, an end 37 of the outer ring 12 in a central axis direction protrudes from a face 36 (an end face of the cylindrical core 27 in a central axis direction) of the core member 16. In this embodiment, a joint 32 between the bus bar terminal 28 and the coil terminal 30 is present above the face 36 of the core member 16 and within a region α surrounded by the outer ring 12, the core member 16, and the resin molded portion 22. Specifically, as shown in FIG. 3, the region α is formed between the resin molded portion 22 and the outer ring 12 in a X direction (in a radial direction of the cylindrical core 27) in the figure and between the face 36 of the core member 16 and the end 37 of the outer ring 12 in a Y direction (in the central axis direction of the cylindrical core 27) in the figure. In this region α, a protecting material 34 which is resin is filled.

According to the stator 1 in this embodiment, the distance between the face 36 of the core member 16 and the joint 32 can be shortened, reducing the height position of the joint 32. The stator 1 can therefore be reduced in size as compared with the case where the coil terminal 30 is placed to protrude in a vertical direction as in the conventional art.
Further, the joint 32 can be protected by the protecting material 34.

### <Method of manufacturing the stator>

A method of manufacturing the stator 1 in the first embodiment will be explained below.
The stator units 10 are first arranged in a cylindrical shape. The outer ring 12 is placed to hold the stator units 10 in the circular arrangement. The cylindrical core 27 consisting of the core members 16 is thus assembled. The coil 20 is mounted on each teeth part not shown provide on the inner periphery side of the cylindrical core 27. As shown in FIG. 4, the coil terminal 30 extends in a vertical direction (in the central axis direction of the cylindrical core 27; in the Y direction in the figure) to protrude from an outer periphery of the coil 20. In this state, no part of the resin molded portion 22 is present in an area β on a side of the coil terminal 30 in the X direction (on an outer periphery side of the cylindrical core 27) in the figure.

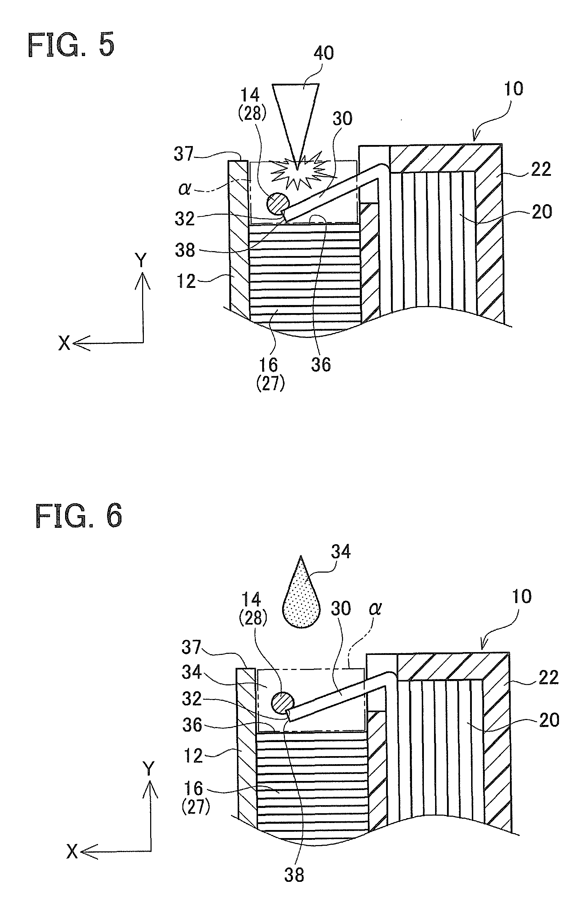

As shown in FIG. 5, the coil terminal 30 is bent in the X direction in the figure to bring a distal end 38 of the coil terminal 30 into the region α present above the face 36 of the core member 16. The bus bar terminal 28 and the coil terminal 30 are joined to each other by welding by use of the welding machine 40.
As shown in FIG. 6, subsequently, the protecting material 34 in a molten state is poured into the region α and then hardened.

According to the method of manufacturing the stator 1 in the first embodiment, the coil terminal 30 is bent from a posture extending in the central axis direction of the core 27 toward the outer periphery of the core 27 and then the bus bar terminal 28 and the coil terminal 30 are joined, forming the joint 32 within the region α. Accordingly, the distance from the face 36 of the core member 16 to the joint 32 is short, so that the stator 1 can be reduced in size.

While the coil terminal 30 is placed in contact with the face 36 of the core member 16, the bus bar terminal 28 is welded to the coil terminal 30. Accordingly, the heat generated during welding to join the bus bar terminal 28 with the coil terminal 30 is dissipated into the core member 16. Therefore, the jigs 106 for cooling the coil terminal 30 as explained in the aforementioned conventional art are unnecessary. After welding between the bus bar terminal 28 and the coil terminal 30 placed in contact with the face 36 of the core member 16, the coil terminal 30 separates from the face 36 of the core member 16 by the elasticity of the coil terminal 30. As a result, the joint 32 between the bus bar terminal 28 and the coil terminal 30 is located apart from the face 36 of the core member 16.

Since the joining is made within the region α present above the face 36 of the core member 16, spatters that will be dispersed during welding are less likely to stick to the resin molded portion 22. Consequently, the jigs 106 for protecting the resin molded portion 22 as explained in the aforementioned conventional art are unnecessary.

Since the coil terminal 30 is provided with enough length so that the distance between the resin molded portion 22 and the joint 32 and the distance between the insulating coating portion of the coil 20 and the joint 32 can be sufficiently long. Thus, the heat generated during welding between the bus bar terminal 28 and the coil terminal 30 is less likely to transfer to the resin molded portion 22 and the insulating coating portion of the coil 20. Consequently, the resin molded portion 22 and the insulating coating portion of the coil 20 can be prevented from deteriorating.

Further, the joint 32 can be protected by the protecting material 34.
This protecting material 34 in a molten state has only to be poured into the region α surrounded by the outer ring 12, the core member 16, and the resin molded portion 22. Therefore, no mold is necessary to pour and harden the protecting material 34. This can simplify the manufacturing process of the stator 1.

Moreover, since the entire bus bar 14 is covered by the protecting material 34, there is no need to coat the bus bar 14 with an insulating coating in advance. Therefore, a manufacturing cost of the stator 1 can be reduced.
Since the protecting material 34 in the molten state is poured into the region α, the protecting material 34 can be certainly filled in the region α. Accordingly, the joint 32 can be protected more reliably by the protecting material 34.

### (Second Embodiment)

A stator 2 in a second embodiment will be explained below. The second embodiment differs from the first embodiment in the following configurations. In the manufacturing method of the stator 2, when an outer ring 12 is to be fixed to the outer periphery of stator units 10 by shrink fitting, a protecting material 42 in a solid state, more specifically, in a pellet form or a powder form is poured or charged. The following explanation is given to a configuration using the protecting material 42 in the pellet form.

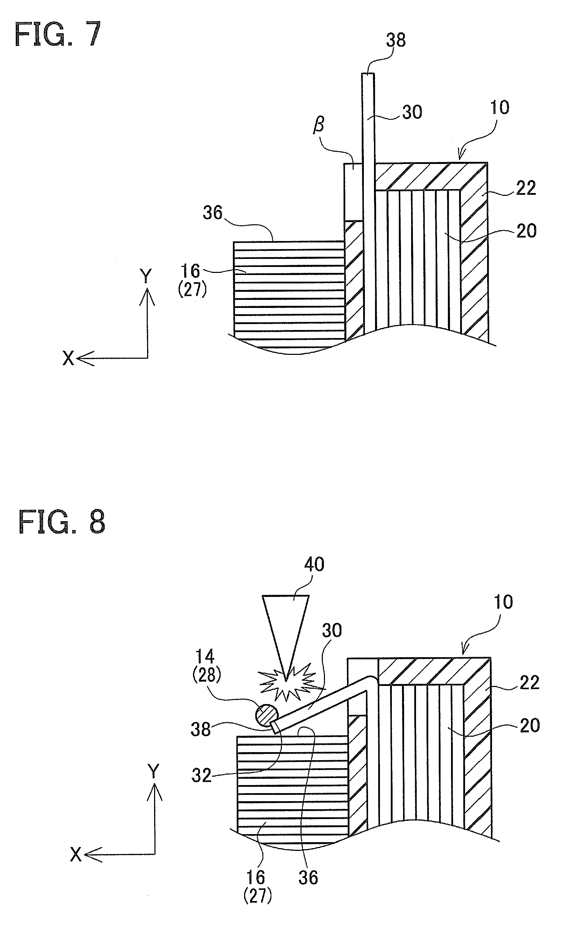

A plurality of the stator units 10 are arranged in a cylindrical shape. Thus, a cylindrical core 27 consisting of a plurality of core members 16 is assembled. A coil 20 is mounted on each teeth part not shown provided on the inner periphery side of the cylindrical core 27. As shown in FIG. 7, a coil terminal 30 extends in a vertical direction (in a central axis direction of the cylindrical core 27; in a Y direction in the figure) to protrude from an outer periphery of the coil 20. In this state, no part of the resin molded portion 22 is present in an area β on a side of the coil terminal 30 in the X direction in the figure. At that time, the outer ring 12 is not yet placed on the outer periphery of the stator units 10.

As shown in FIG. 8, subsequently, the coil terminal 30 is bent in the X direction in the figure and a bus bar terminal 28 and a coil terminal 30 are joined by welding by use of a welding machine 40.

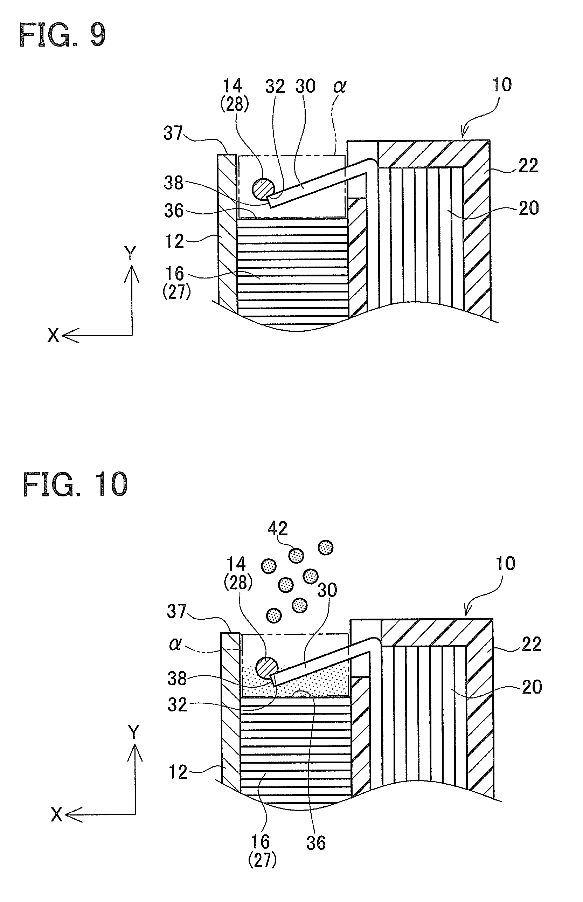

Subsequently, the outer ring 12 is fixed to the outer periphery of the cylindrical core 27 by shrink fitting as shown in FIG. 9. Herein, as one example, the outer ring 12 is heated to 300°C for shrink fitting.

While the shrink fitting of the outer ring 12 is being performed as above, the pellet-shaped protecting material 42 is poured into the region α surrounded by the outer ring 12, the core member 16, and the resin molded portion 22 as shown in FIG. 10. Then, the pellet-shaped protecting material 42 is melted by residual heat of the shrink fitting of the outer ring 12, so that the protecting material 42 is filled in the region α. The pellet-shaped protecting material 42 may be selected from polyphenylene sulfide resin, epoxy resin, and others.

According to the manufacturing method of the stator 2 in the second embodiment, the following advantages can be achieved in addition to the advantages of the first embodiment. Since the protecting material 42 in the pellet form or in the powder form is melted by use of the residual heat of the shrink fitting of the outer ring 12, the protecting material 34 does not have to be melted in advance as in the first embodiment. This can simplify the manufacturing process and hence reduce a manufacturing cost of the stator 2.
Since the protecting material 42 is selected from polyphenylene sulfide resin, epoxy resin, and others, the insulation characteristics can be enhanced.

### (Third Embodiment)

A stator 3 in a third embodiment will be explained below. The third embodiment differs from the second embodiment in the use of foaming resin as the protecting material 42 in the pellet form to be poured into the region α as shown in FIG. 10. The foaming resin is for example phenol resin, and others. Accordingly, the foaming resin is melted while foaming by residual heat of the shrink fitting of the outer ring 12, so that the protecting material 42 is filled in the region α.

According to the third embodiment in which the foaming resin is used as the pellet-shaped protecting material 42, the following advantages can be provided in addition to the advantage of the second embodiment. A necessary amount of the protecting material 42 can be reduced and hence the weight of the stator 3 can be decreased.

Since the foaming resin is melted while foaming, the protecting material 42 is easy to distribute all over the region α. This surely insulates the bus bars 14 and the coil terminals 30 from the outside, thereby enhancing the insulation performance of the stator 3.

### (Fourth Embodiment)

A stator 4 in a fourth embodiment will be explained. The fourth embodiment differs from the second embodiment in the use of resin containing a heat transfer material as the pellet-shaped protecting material 42 to be poured into the region α as shown in FIG. 10. Accordingly, the protecting material 42 is melted by residual heat of the shrink fitting of the outer ring 12, so that the resin containing the heat transfer material is filled in the region α.

According to the fourth embodiment in which the resin containing the heat transfer material is used as the pellet-shaped protecting material 42, therefore, the following advantages can be provided in addition to the advantages of the second embodiment. The heat generated in the bus bars 14 and the coil terminals 30 is easily dissipated to the outside. Consequently, the heat dissipation characteristics of the stator 4 are improved, thereby improving the performance of a motor.

### (Fifth Embodiment)

A stator 5 in a fifth embodiment will be explained below.

### <Explanation of the structure of a stator>

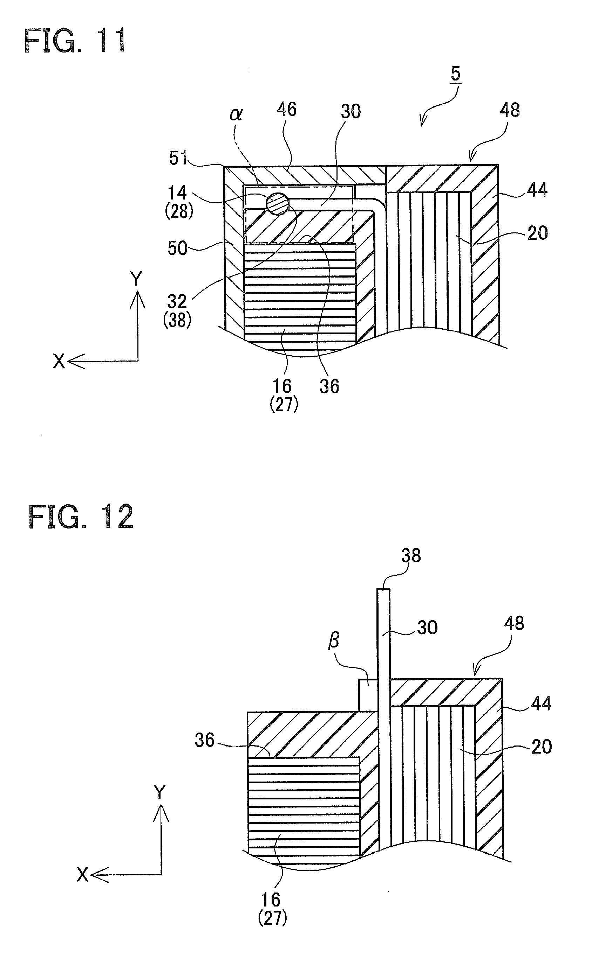

The stator 5 in the fifth embodiment differs from the stator 2 in the second embodiment in that a resin molded portion 44 is also formed over a face 36 of a core member 16 as shown in FIG. 11, that is, the face 36 of the core member 16 is covered with resin by molding. Further, an outer ring 50 is provided with a flange 46. This flange 46 is formed to protrude radially inward from an end 51 of the outer ring 50 in its central axis direction. A joint 32 placed in a region α is covered by the flange 46.

According to the stator 5 in the fifth embodiment, the joint 32 is covered by the flange 46 of the outer ring 50 and thus the joint 32 can be protected.

### <Explanation of a manufacturing method of the stator>

The stator 5 in the fifth embodiment as above is manufactured in the following manner.
For the stator 5 in the fifth embodiment, a split-type stator unit ("stator unit") 48 is used in which an outer periphery of a coil 20 and the face 36 of the core member 16 are covered with molding resin to form a resin molded portion 44 as shown in FIG. 12.

A plurality of the stator units 48 are arranged in a cylindrical shape. Thus, a cylindrical core 27 consisting of a plurality of the core members 16 is assembled. The coil 20 is mounted on each teeth part not shown provided on the inner periphery side of the cylindrical core 27. A coil terminal 30 extends in a vertical direction (in a central axis direction of the cylindrical core 27; in a Y direction in the figure) to protrude from the outer periphery of the coil 20 as shown in FIG. 12. In this state, no part of the resin molded portion 44 is present in an area β on a side of the coil terminal 30 in the X direction in the figure.

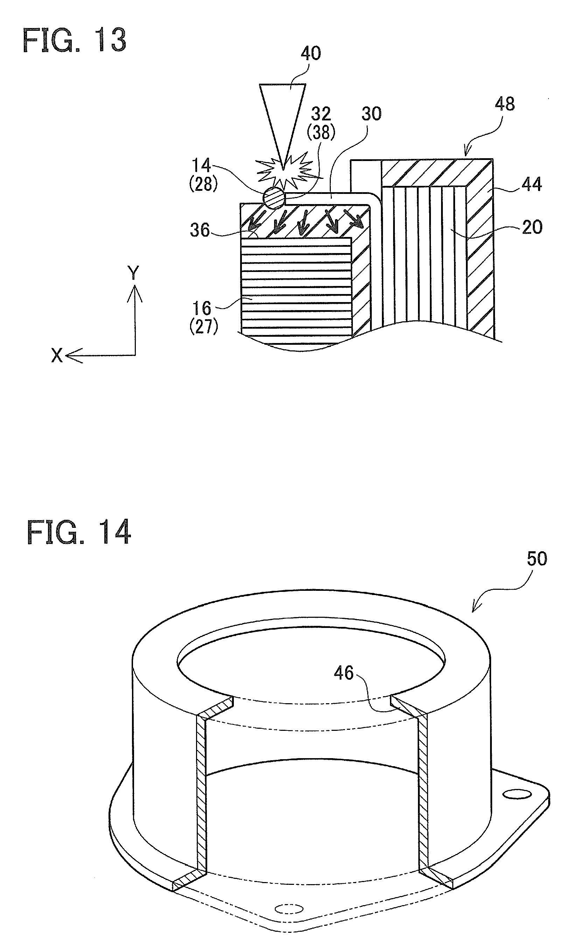

As shown in FIG. 13, subsequently, the coil terminal 30 is bent in the X direction in the figure so that the entire coil terminal 30 is placed in contact with the resin molded portion 44 formed on the face 36 of the core member 16. Then, a bus bar terminal 28 and the coil terminal 30 are joined by welding by use of a welding machine 40.

The outer ring 50 is fixed by shrink fitting to the outer periphery of the stator units 48 arranged in the cylindrical shape (the outer periphery of the cylindrical core 27) as shown in FIG. 11. Herein, as one example, the outer ring 50 is heated to 300°C for shrink fitting. As shown in FIG. 14, the outer ring 50 in this embodiment includes the flange 46 formed to protrude radially inward from the end 51 in the central axis direction of the outer ring 50.

According to the manufacturing method of the stator 5 in the fifth embodiment in which the outer ring 50 is fixed by shrink fitting to the outer periphery of the stator units 48 arranged in the cylindrical shape and the flange 46 covers the joint 32, the following advantages can be provided in addition to the advantages of the second embodiment. The process of pouring the protecting material 42 can be eliminated and the manufacturing process of the stator 5 can be simplified accordingly. This can reduce a manufacturing cost of the stator 5.

Further, the entire coil terminal 30 is placed in contact with the resin molded portion 44 formed on the face 36 of the core member 16 during welding between the bus bar terminal 28 and the coil terminal 30, thereby providing a large contact area of the coil terminal 30 and the resin molded portion 44. Accordingly, the heat generated during welding between the bus bar terminal 28 and the coil terminal 30 is dissipated into the resin molded portion 44 formed on the face 36 of the core member 16. This can restrain the heat from transferring to the coil 20. Thus, the jigs 106 for cooling the coil terminal 30 as explained in the aforementioned conventional art are unnecessary.

### (Sixth Embodiment)

A sixth embodiment will be explained below.

### <Explanation of the structure of a stator>

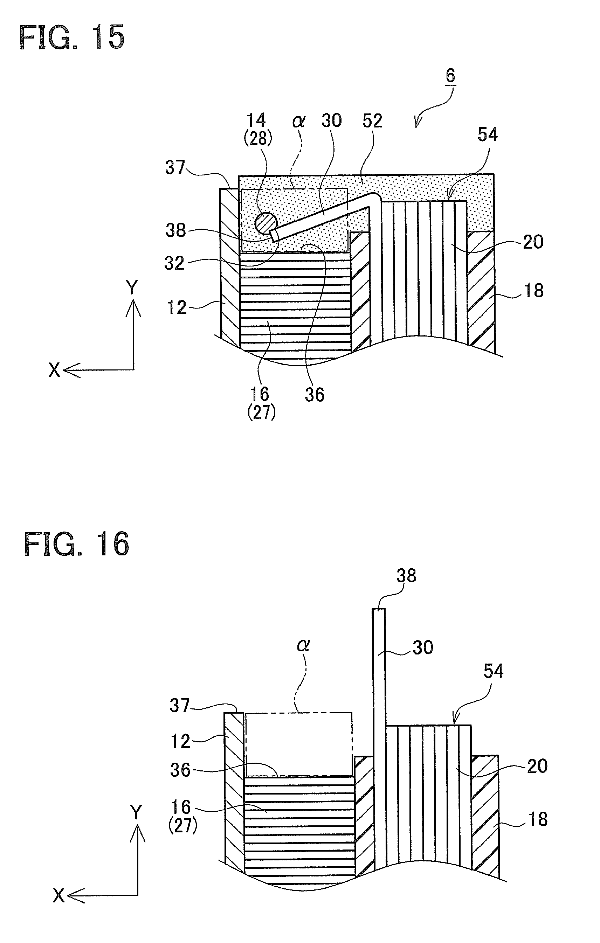

As shown in FIG. 15, a stator 6 in the sixth embodiment differs from the stator 2 in the second embodiment in that a resin molded portion 52 is formed to entirely cover a bus bar 14, an insulator 18, a coil 20, a coil terminal 30, a joint 32, and a face 36 of a core member 16 by resin molding.

### <Explanation of a manufacturing method of the stator>

The stator 6 in the sixth embodiment is manufactured as below.
A split-type stator unit ("stator unit") 54 including the core member 16, the insulator 18, and the coil 20, but not including the resin molded portion 22, is first prepared. A plurality of the stator units 54 are arranged in a cylindrical shape. An outer ring 12 holds the stator units 54 in a circular arrangement. At that time, the cylindrical core 27 consisting of the core members 16 is assembled.

The coil 20 is mounted on a teeth part not shown provided on the inner periphery side of the cylindrical core 27. As shown in FIG. 16, the coil terminal 30 extends in a vertical direction (in a central axis direction of the cylindrical core 27; in a Y direction in the figure) to protrude from the outer periphery of the coil 20.

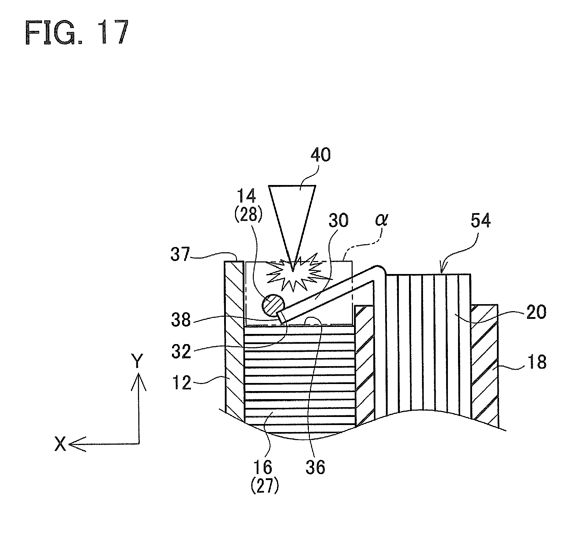

As shown in FIG. 17, the coil terminal 30 is bent in a X direction in the figure so that a distal end 38 of the coil terminal 30 is brought into a region α present above the face 36 of the core member 16. A bus bar terminal 28 and the coil terminal 30 are joined by welding by use of a welding machine 40.

Successively, the bus bars 14, the insulators 18, the coils 20, the coil terminals 30, the joints 32, and the faces 36 of the core members 16 are entirely covered with resin by molding, forming the resin molded portion 52 as shown in FIG. 15.

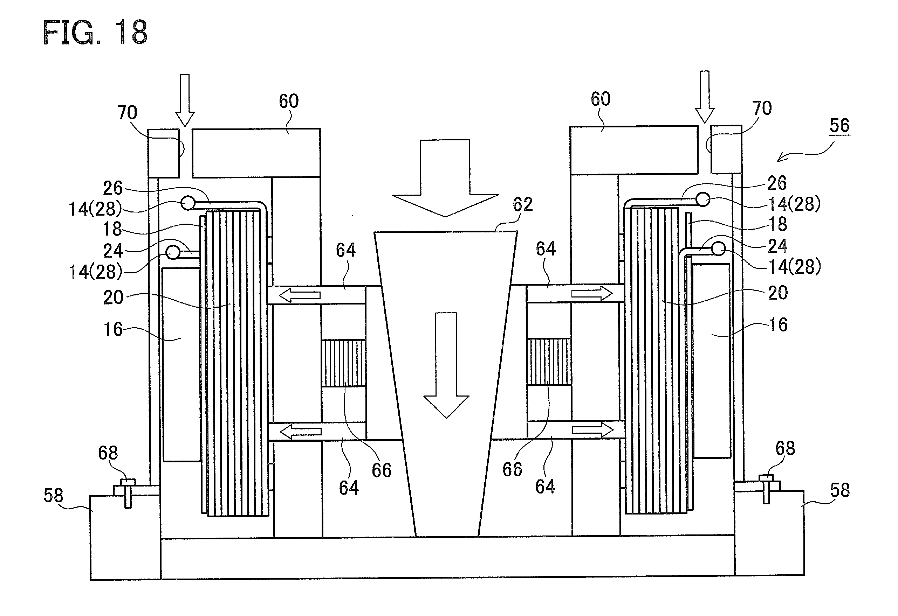

Herein, FIG. 18 shows one example of a molding device 56 for covering the outer periphery of the coils 20 and the faces 36 of the core members 16 by resin molding. The molding device 56 includes a base 58, a molding section 60, a cylinder section 62, positioning pins 64, springs 66, and others. The outer ring 12 is secured to the base 58 with bolts 68 in advance. The cylinder section 62 is moved down to move the positioning pins 64 radially outwardly to adjust the position of the inner diameter side of each coil 20 and simultaneously resin is poured through an inlet 70 of the molding section 60.

According to the manufacturing method of the stator 6 in the sixth embodiment, in which the bus bars 14, the insulators 18, the coils 20, the coil terminals 30, the joints 32, and the faces 36 of the core members 16 are entirely covered together with molding resin. This configuration can achieve the following advantages in addition to the advantages of the first embodiment. The process of filling the protecting material 34 is made unnecessary and thus the manufacturing process of the stator 6 can be simplified. This can reduce a manufacturing cost of the stator 6.

Since the bus bars 14 are entirely covered with resin, there is no need to coat each bus bar 14 with an insulating coating in advance. Thus, the manufacturing process of the stator 6 can be simplified, leading to a reduction in manufacturing cost of the stator 6.

The aforementioned embodiments are mere examples and do not particularly limit the present invention. The present invention may be embodied in other specific forms without departing from the essential characteristics thereof.

### DESCRIPTION OF THE REFERENCE SIGNS

- 1 to 6: Stator
- 10: Split-type stator unit
- 12: Outer ring
- 14: Bus bar
- 16: Split core member
- 18: Insulator
- 20: Coil
- 22: Resin molded portion
- 24: First coil terminal
- 26: Second coil terminal
- 27: Core
- 28: Bus bar terminal
- 30: Coil terminal
- 32: Joint
- 34: Protecting material
- 36: Face
- 37: Flange
- 38: Distal end
- α: Region

## Claims

1. A stator comprising a cylindrical core, a cylindrical outer ring provided on an outer periphery of the core, a coil mounted on a teeth part of the core, and a bus bar joined with a terminal of the coil, an end of the outer ring in an axial direction thereof protruding from an end face of the core in the axial direction, wherein
a joint joining a terminal of the bus bar and the terminal of the coil is placed in a region defined between the coil and the outer ring in a radial direction of the core and between the end face of the core and the end of the outer ring in the axial direction of the core.

2. The stator according to claim 1, wherein a protecting material is filled in the region to protect the joint.

3. The stator according to claim 2, wherein the protecting material is foaming resin.

4. The stator according to claim 2, wherein the protecting material is resin containing a heat transfer material.

5. The stator according to any one of claims 1 to 4, wherein the outer ring includes a flange formed to extend radially inwardly from the end.

6. A method of manufacturing a stator comprising a cylindrical core, a cylindrical outer ring provided on an outer periphery of the core, a coil mounted on a teeth part of the core, and a bus bar joined with a terminal of the coil, an end of the outer ring in an axial direction thereof protruding from an end face of the core in the axial direction, the method comprising the steps of:
bending the terminal of the coil from a state extending in the axial direction of the core toward the outer periphery of the core; and
joining a terminal of the bus bar and the terminal of the coil;
the terminal of the bus bar and the terminal of the coil being joined in a region defined between the coil and the outer ring in a radial direction of the core and between the end face of the core and the end of the outer ring in the axial direction of the core.

7. The method of manufacturing a stator according to claim 6, further comprising the step of filling a protecting material for protecting the joint in the region after the terminal of the bus bar and the terminal of the coil are joined.

8. The method of manufacturing a stator according to claim 7, wherein the protecting material in a molten state is poured into the region.

9. The method of manufacturing a stator according to claim 7, wherein while the outer ring is fixed by shrink fitting to the outer periphery of the core, the protecting material in a solid state is poured into the region.

10. The method of manufacturing a stator according to claim 9, wherein the protecting material is foaming resin.

11. The method of manufacturing a stator according to claim 9, wherein the protecting material is resin containing a heat transfer material.

12. The method of manufacturing a stator according to claim 6, wherein
the outer ring includes a flange formed to extend radially inwardly from an end of the outer ring in an axial direction thereof, and
after joining the terminal of the bus bar and the terminal of the coil, the method further comprises fixing the outer ring by shrink fitting to the outer periphery of the core so that the flange covers the joint.
